# EUROPÄISCHE PATENTSCHRIFT

(11) **EP 1 106 888 B1**
(45) Veröffentlichungstag und Bekanntmachung des Hinweises auf die Patenterteilung: **20.09.2006**
(21) Anmeldenummer: 00126246.8
(22) Anmeldetag: 01.12.2000
(51) Int. Cl.: F16L 5/02

(54) **Vorrichtung zur abgedichteten Durchführung von Kabeln, Leitungen oder Rohren**
Sealing leadthrough arrangement for cables, conduits or pipes
Dispositif de traversée étanche pour câbles, conduits ou tuyaux

(30) Priorität: 08.12.1999 DE 19959151
(43) Veröffentlichungstag der Anmeldung: 13.06.2001
(73) Patentinhaber: Roxtec AB, 371 32 Karlskrona (SE)
(72) Erfinder: Gutjahr, Bernd, 21640 Horneburg (DE)
(74) Vertreter: Hansmann, Dierk

(56) Entgegenhaltungen:
- GB-A- 2 138 047
- US-A- 4 304 079

## Beschreibung

Die Erfindung bezieht sich auf eine Vorrichtung zur abgedichteten Durchführung von Kabeln, Leitungen bzw. Rohren in Decken- oder Wanddurchbrüchen von Hochbauten.

Vorrichtungen dieser Art sind im Schiffsbau und Apparatebau in unterschiedlichen Ausbildungen bekannt. Eine Anordnung dieser Art ist aus der DE-C-196 02 760 zu entnehmen. Die baukastenmäßig in einen aus mehreren Einzelrahmen bestehenden Rahmen eingesetzten Paßstücke umhüllen dabei als Halbschalen die aufgenommenen Kabel, Leitungen bzw. Rohre, um eine Abdichtung zu erzielen.

Nach der US-A-4 304 079 ist eine Anordnung für Kabeldurchtritte im Hochbau vorgeschlagen worden, die durch miteinander verspannbare einzelne Rohrelemente gebildet wird und ein feuerhemmender Durchtritt der Kabel im Brandfall ermöglicht wird. Hierbei werden entsprechende Zwischenlagen zwischen den Kabeln eingesetzt, die die Zwischenräume erst im Brandfall abdichten. Es wird hierdurch keine gasdichte und flüssigdichte bzw. feuerhemmende Durchführung in der Montagephase geschaffen.

Beim Einsatz im Hochbau sind die Anforderungen an die Dichtigkeit die gleichen. Es liegen aber andere Verhältnisse bezüglich der Anforderungen an den Rahmen vor.

Es ist bereits auch für den Einsatz im Hochbau gemäß DE-C-7 27 160 bekannt, Durchführungen für Leitungen durch eine Wandöffnung auszubilden und eine Abdichtung über Paßstücke vorzunehmen. Hierbei bildet die Wandung an beiden Stirnseiten selbst einen Rahmen und es ist ein Futterrohr zwischen den gebildeten Öffnungen eingesetzt sowie beiderseits eine getrennte Abdichtung gebildet. Dabei besteht der Mangel, daß ein herausnehmbarer Kern erforderlich ist, um die Aufnahmebereiche für die Paßstücke zu bilden. Es wird somit kein verlorener Rahmen als belastbarer Spannrahmen für die Paßstücke gebildet, der für hochbelastbare Abdichtungen erforderlich ist.

Es ist weiterhin aus der DE-A-199 03 515 bekannt, daß entsprechende aufsetzbare Elemente über Nut- und Federverbindungen in ihren Randzonen wahlweise zu einer größeren Einheit als Einführungsplatte für Rohrsysteme ausgebildet ist.

Der Erfindung liegt die Aufgabe zugrunde, eine Vorrichtung zur abgedichteten Durchführung von Kabeln, Leitungen bzw. Rohren in Decken- oder Wanddurchbrüchen von Hochbauten auszubilden, die zusätzlich feuerbeständig und auch zur Brandabschottung einsetzbar sowie gasdicht ausgebildet und unempfindlich gegen Korrosion ist und ferner schädlichen Ausdehnungen des Rahmens gegenüber der Durchbruchsbegrenzung vermeidbar sind.

Die Lösung dieser Aufgabe erfolgt erfindungsgemäß durch die Merkmalskombination des Anspruches.

Hierdurch wird vermieden, daß Korrosion, wie bei eingesetzten Metallrahmen, im Umgebungsbereich des Rahmens auftreten und es wird eirreicht, daß entsprechende materialspezifische Eigenschaften des Umgebungsmaterials ebenfalls durch den Rahmen verwirklicht werden sowie eine Oberflächengüte und Maßgenauigkeit der Innenabmessungen des eingesetzten Spannrahmens zur Aufnahme und zum Abdichten der Paßstücke gewährleistet wird.

In der Zeichnung sind Ausführungsbeispiele der Erfindung schematisch dargestellt. Es zeigen:

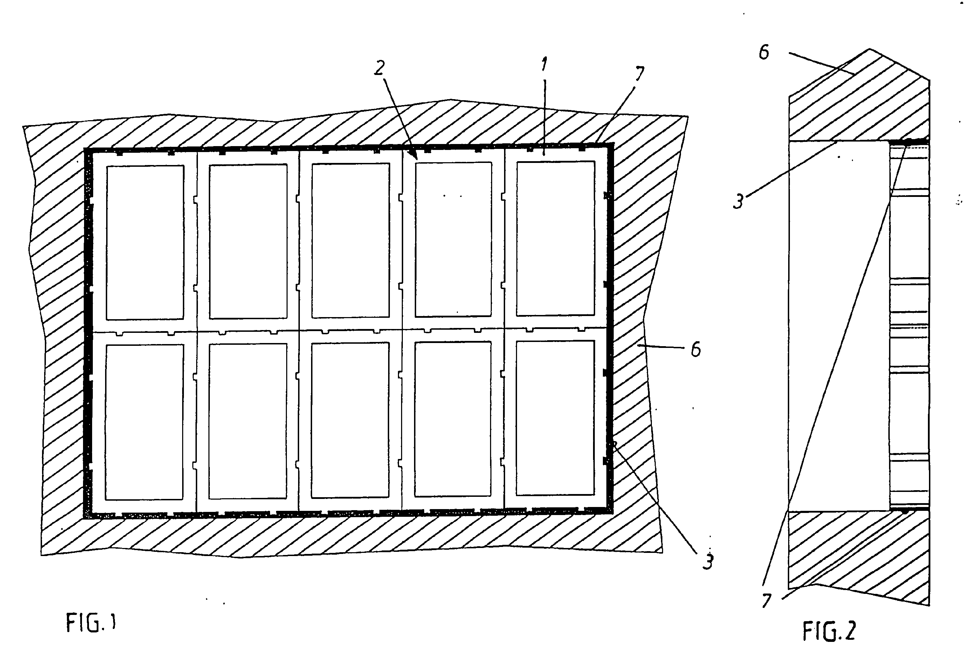

- Fig. 1: eine Draufsicht auf einen in einem Durchbruch eingesetzten Rahmen aus mehreren zusammengesetzten Einzelrahmen,
- Fig. 2: eine Schnittdarstellung gemäß Fig. 1,

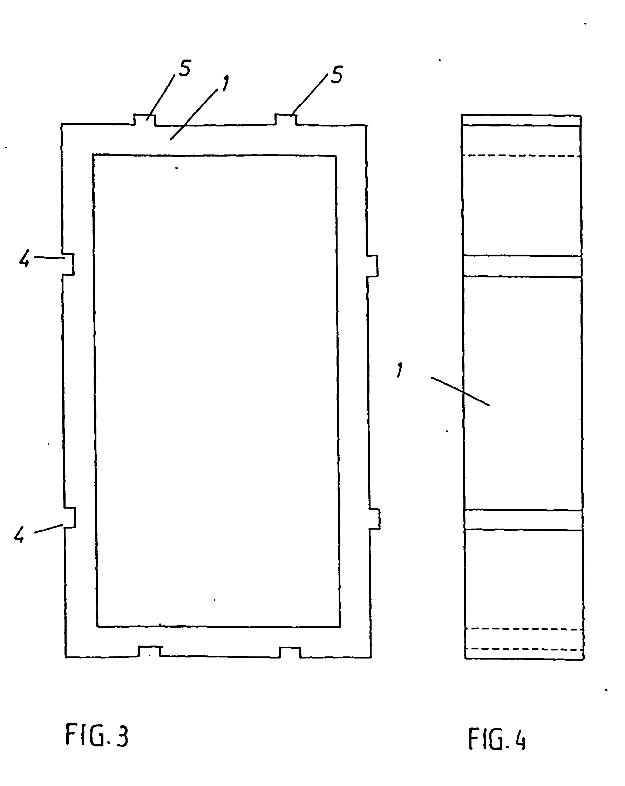

- Fig. 3: eine Draufsicht auf einen Einzelrahmen in vergrößerter Darstellung **und**
- Fig. 4: eine Seitenansicht gemäß Fig. 3.

Bei der Darstellung sind die eingesetzten Paßstücke für die abzudichtenden Kabel, Leitungen bzw. Rohre nicht mit dargestellt. Es wurden lediglich Rahmen 1 als Einzelrahmen dargestellt, die in diesem Fall zu einem Gesamtrahmen 2 zusammengesetzt sind.

Der Rahmen 1 besteht aus zementhaltigem Baustoff in Anpassung an den Umgebungswerkstoff eines Durchbruches 3. Hierdurch wird ein ähnlicher Ausdehnungskoefizient des Rahmens 1 wie der Umgebung erzielt und damit auch eine günstige Ausbildung bezüglich der Feuerbeständigkeit zur Brandschottung erfüllt. Der Rahmen 1 ist unempfindlich gegen Wasser und Feuchtigkeit und bedarf keiner besonderen Konservierung, da er keinerlei Korrosion wie ein Metallrahmen unterliegt.

Um eine Anpassung an die erforderlichen Verhältnisse und Durchbrüche 3 vorzunehmen sind die Einzelrahmen 1 über entsprechende zugeordneten Nut- und Federausbildungen 4,5 zu einen Gesamtrahmen 2 zusammensteckbar.

Der Rahmen 1 im einzelnen oder der Gesamtrahmen 2 wird mit entsprechenden Schalungskernen direkt in eine Wandung 6 mit eingegossen oder es erfolgt eine Verbindung zwischen Rahmen 1,2 und Wandung 6 über ein übliches Zement-Sand-Gemisch 7. Selbstverständlich ist es auch möglich, einen geeigneten Kleber als Verbindungsmittel einzusetzen.

Der Rahmen 1 oder Gesamtrahmen 2 bildet dabei an seinen dem Durchbruch 3 zugewandten Randzonen durch die Nut- und Federelemente 4,5 selbst Verankerungen. Es ist aber auch möglich, daß in den Nut- und Federelementen 4,5 zusätzliche Anker befestigt werden, um im Durchbruch 3 eine Verankerung zu erzielen.

## Patentansprüche

1. Vorrichtung zur abgedichteten Durchführung von Kabeln, Leitungen bzw. Rohren in Decken- oder Wanddurchbrüchen (3) von Hochbauten, bestehend aus einem in der Durchbruchbegrenzung der Wand oder Decke einbaubaren, aus mehreren Einzelrahmen (1) bestehenden Rahmen (2) für die Aufnahme von Passstücken zur Dichtung, der an seinen dem Durchbruch zugewandten Randzonen Verankerungselemente aufweist,
wobei in den Einzelrahmen (1) baukastenförmig über- und/oder nebeneinander liegende, ganz oder teilweise elastische, die Kabel, Leitungen, bzw. Rohre aufnehmende Passstücke vorgesehen sind und über eine zugeordnete Einrichtung ein in Rahmenebene wirkender, die einzelnen Passstücke dichtend im Einzelrahmen (1) haltender Druck einstellbar ist,
und wobei die Einzelrahmen (1) aus zementhaltigen Baustoffen in Anpassung an den Werkstoff der Durchbruchsbegrenzung (6) bestehen und mit Zement/Sand/Mörtel (7) bzw. mit einem Kleber in der Durchbruchsöffnung (3) oder durch Einbetonieren in der Wand oder Decke festlegbar sind
und wobei die Einzelrahmen (1) über Nut- und Federverbindungen (4,5) in ihren Randzonen wahlweise zu einer Einheit zusammensetzbar sind und dem Durchbruch zugeordnet werden.

## Claims

1. A sealing lead-through arrangement for cables, conduits or pipes in roof or wall passages (3) of buildings, comprising a frame (2), comprised of several discrete frames (1), which may be built into the passage restriction of the wall or roof to receive fitting pieces for sealing, which have anchor elements in the end zones facing the passage,
wherein wholly or partially elastic fitting pieces to receive the cables, conduits or pipes are arranged in a modular arrangement above and/or adjacent to each other in the discrete frames (1) and a variable pressure acting in a plane of the frame may be established by means of an arranged device, which will hold the separate fitting pieces sealingly in the discrete frames (1),
and wherein the discrete frames (1) are formed of constructing material containing cement as an adaptation to the constructing material of the passage restriction (6) and may be fixed in the wall or roof with cement/sand/mortar (7) or with glue in the passage opening (3) or by embedment in concrete in the wall or roof,
and wherein the discrete frames (1) alternatively can be assembled to a unit by means of grooves and keys connections (4, 5) in their edge zones and be adapted to the passage.

## Revendications

1. Dispositif pour la traversée étanche de câbles, de conduites, respectivement, de tuyaux dans des perçages de cloison (3) de murs ou de plafonds de superstructures, comprenant un cadre (2) constitué de plusieurs cadres uniques (1), lequel peut être intégré dans la limite de perçage du mur ou du plafond afin d'y loger des cales d'ajustage destinées au calfeutrage, lequel comprend des éléments d'ancrage au niveau de ses zones limitrophes orientées vers le perçage, les cales d'ajustage ayant la forme d'une boîte de construction, étant prévues dans le cadre unique (1), et disposées les unes à côtés des autres, et entièrement ou partiellement élastiques, et recevant les câbles, les conduites, respectivement, les tuyaux, une pression pouvant être réglée à l'aide d'un dispositif attribué, agissant au niveau de la zone de cadre, et maintenant les cales d'ajustage de manière étanche dans le cadre unique (1), les cadres uniques (1) étant constitués de matériaux contenant du ciment et adaptés à la matière première constituant la limite de perçage (6), et pouvant être fixés à l'aide de ciment/sable/mortier (7) respectivement à l'aide d'une colle dans l'ouverture de perçage (3) ou en les encastrant dans le béton à l'intérieur du mur ou du plafond, et les cadres uniques (1) pouvant être montés de manière sélective sur une unité au niveau de leur zone limite à l'aide de connexions à ressort (4, 5), et étant attribués au perçage.
